# EUROPÄISCHE PATENTSCHRIFT

(11) **EP 2 911 985 B1**
(45) Veröffentlichungstag und Bekanntmachung des Hinweises auf die Patenterteilung: **08.01.2020**
(21) Anmeldenummer: 13779196.8
(22) Anmeldetag: 15.10.2013
(51) Int. Cl.: C02F 11/08, C02F 103/36, C02F 101/36

(54) **DEKONTAMINIEREN DURCH HYDROTHERMALE KARBONISIERUNG VON KONTAMINIERTEM MATERIAL**
DECONTAMINATION BY HYDROTHERMAL CARBONIZATION OF CONTAMINATED MATERIAL
DÉCONTAMINATION PAR CARBONISATION HYDROTHERMIQUE DE MATÉRIAU CONTAMINÉ

(30) Priorität: 25.10.2012 IT BZ20120036
(43) Veröffentlichungstag der Anmeldung: 02.09.2015
(73) Patentinhaber: Eco-Research Srl-GmbH, 39100 Bolzano (IT)
(72) Erfinder: TIRLER, Werner, I-39100 Bolzano (IT); PALMITANO, Marco, I-39100 Bolzano (IT); BASSO, Albino, I-39100 Bolzano (IT)
(74) Vertreter: Ausserer, Anton
(86) Internationale Anmeldenummer: PCT/EP2013/071530
(87) Internationale Veröffentlichungsnummer: WO 2014/063961

(56) Entgegenhaltungen:
- EP-A2- 1 002 767

## Beschreibung

Die Erfindung bezieht sich auf ein Verfahren zur Dekontaminierung von durch Schadstoffe belastetem Material, insbesondere von Produkten, die persistente chlorierte, organische Schadstoffe enthalten, wie z.B. Polychlorierte Dibenzo-p-dioxine und Dibenzofurane, Polychlorierte Biphenyle, Pestizide und toxische, organische Stoffe, wie aromatische polyzyklische Kohlenwasserstoffe (PAK), und auf eine Anlage zur Durchführung desselben.

Der Prozess der hydrothermalen Karbonisierung ist ein Verfahren, wo die Biomasse in einen Reaktor eingegeben und zu einer chemischen Reaktion gebracht wird. Der Prozess der hydrothermalen Karbonisierung ist ein einfaches und effizientes chemisches Verfahren zur Herstellung von Produkten aus exothermen Reaktionen.

In der Praxis führt dieser Prozess ein Verfahren innerhalb weniger Stunden durch, das in der Natur Tausende, wenn nicht Millionen von Jahren benötigt.

Die hydrothermale Karbonisierung gibt bei einer Temperatur von ungefähr 200° C und einem Druck zwischen 20 und 30 bar den natürlichen Kohle-Bildungsprozess wieder. Sie wird mit Erfolg bei der Umsetzung von Biomasse in Kohle angewandt, die als Bodenverbesserer in der Landwirtschaft oder als Brennstoff verwendet werden kann.

Die hydrothermale Karbonisierung wird wie in der DE 10 2008 049 737 A1 mit dem folgenden Vorgehen durchgeführt. Feuchte Biomasse wird bei einer Temperatur von 200° C unter Ausschluss von Luft in einen Kohlenschlamm umgewandelt. Dieser Schlamm kann anschließend getrocknet und genutzt werden.

In der deutschen Veröffentlichung wird als Problem angegeben, dass die Inhalte der Eingangsstoffe genau die Inhalte der Ausgangsstoffe widerspiegeln, da es sich um einen geschlossenen hermetischen Prozess handelt.

Aus auf biologischen Klärschlämmen vorgenommenen Studien (Tirler 2011) geht hervor, dass während des Prozesses der hydrothermalen Karbonisierung der Inhalt an Dioxinen erhöht wird. Das nach einigen Stunden bei einer Behandlung bei etwa 200°C erhaltene Produkt wies Dioxinwerte auf, die als Toxizitätsgleichwerte ausgedrückt höher liegen, als der Ausgangsschlamm. Dadurch kann das Produkt als Boden-Verbesserer in der Landwirtschaft nur mehr beschränkt Verwendung finden.

Aus der US 6 010 632 ist ein Verfahren bekannt zur hydrothermalen oxidation von organischen Verbindungen. Dabei wird ein Oxidationsmittel eingesetzt. In der Veröffentlichung von Onwudili et al Organohalogen Compounds Vol 73, 178-1783 (2011) beschrieben, geht eindeutig hervor, dass durch Wasser, Druck und Temperatur alleine kein Abbau von chlororganischen Verbindungen in Flugasche stattfindet.

Das Ziel der vorliegenden Erfindung ist ein Verfahren, das eine Dekontamination der kontaminierten Anteile nicht unter oxidativen sondern unter reduzierenden Bedingungen, für die eine organische Substanz (zB. Biomasse) notwendig ist, bewirkt, sowie eine Anlage zur Durchführung des erfindungsgemäßen Verfahrens. Das Ziel wird durch ein erfindungsgemäßes Verfahren nach Anspruch 1 erreicht.

Das erfindungsgemäße Verfahren zur Behandlung einer kontaminierten Masse, die 1% bis 50% der Gewichtanteile der Gesamtmasse bilden, unter Verwendung von 1% bis 50% an Gewichtsanteilen von Biomasse und von Wasser, das 50% bis 90% der gesamten Gewichtsanteile ausmacht, umfasst den folgenden Schritt:
- Behandlung der Masse bei einer Temperatur oberhalb von 300°C, vorzugsweise von 300°C bis 400°C und bei einem Druck oberhalb von 90 bar, vorzugsweise von 90 bis 250 bar und einer Behandlungsdauer oberhalb von 1 Stunden, in vorteilhafter weise über 5 Stunden, wenn ein Abbau der Schadstoffe von über 90% erreicht werden soll, in einem hermetisch abgeschlossenen Raum unter Ausschluss von Sauerstoff.

Die kontaminierte Masse enthält die kontaminierten Teile, der Anteil der kontaminierten Teile kann auch unendlich klein sein.

In einem weiteren erfindungsgemäßen Verfahrensschritt kann die kontaminierte Masse auch aus nur kontaminierten Anteilen bestehen.

Das beschriebene Verfahren bewirkt als Effekt eine überraschende Zerstörung der kontaminierenden Substanzen innerhalb der Masse. Um die notwendigen Temperaturen zu erreichen ist es vorzuziehen die Wärme von außen hinzufügen. Dadurch muss die Anlage gemäß Anspruch 1 eine Einrichtung umfassen, die Wärme in das Verfahren einbringt und die notwendigen Temperaturen gewährleistet.

Vor dem Beginn des Verfahrens, wird die zu behandelnde Masse derart vorbereitet, dass ausreichend Teile von organischem Kohlenstoff und Wasser enthalten sind.

Die zu behandelnde Masse kann schon ausreichend organische Kohlenstoffteile und Wasser enthalten, wenn dies zum Beispiel ein feuchter Schlamm ist, der zu behandeln ist.

In weiteren Fällen, wo die zu behandelnde Masse beispielsweise eine industrieller Abfall (z.B. Filterstaub) ist, muss dieser mit einer organischen Kohlenstoff enthaltenden Masse, wie zum Beispiel Biomasse und Wasser versetzt werden, um die notwendigen Merkmale für das Verfahren zu erreichen.

Nachfolgend wird ein erfindungsgemäßes Verfahrensbeispiel anhand eines beigefügten Flussschemas in nicht limitierender Weise beschrieben. Es zeigen:
- Figur 1: ein Flussschema eines erfindungsgemäßen Verfahrens mit Einzelcharge, und
- Figur 2: ein Flussschema eines erfindungsgemäßen Verfahrens im kontinuierlichen Fluss.

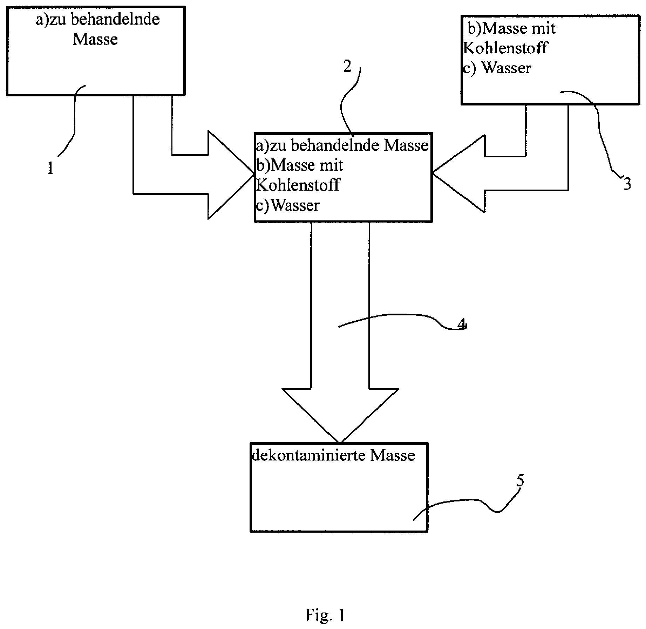

Figur 1 zeigt eine Masse 1, die zu behandeln ist. Diese Masse 1 wird in einen Behälter/Reaktor 2 eingegeben, wo, falls erforderlich, eine Charge(Ladung) 3 mit organischem Kohlenstoff und/oder Wasser zugegeben wird. Im Behälter/Reaktor 3 wird die Masse auf eine Temperatur von mindestens 300°C und ein Druck von mindestens 90 bar für eine Dauer, die den gewünschten Abbaugrad erziehlt, gebracht. Während dieses Verfahrens 4 werden die in der zu behandelnden Masse enthaltenen kontaminierten Substanzen beträchtlich reduziert und man erhält die dekontaminierte Masse 5.

Nachfolgend wird ein ausführliches Beispiel beschrieben, bei dem einer Masse von 25 g von Stäuben (zu behandelnde Masse) eines von einem Verbrennungsofen von festen Abfällen kommenden Filters, 75 g Klärschlamm (Masse mit organischem Kohlenstoff) hinzu gegeben wurden. Diese wurden zusätzlich mit 50 ml Wasser versetzt. Für den Versuch wurde ein Behälter aus Stahl AISI 316 verwendet. 200g des Materials (zu behandelnde Masse (a) + organischer Kohlenstoff (b) + Wasser (c)) wurden im Behälter 2 aufgegeben. Nach 8 Stunden bei 310°C wurden die Werte der kontaminierenden Substanzen wie folgt reduziert:

| | Ausgangs masse (a+b+c) | Entseuchte Masse | Reduktion in % |
|---|---|---|---|
| Dioxine in pg TEQ/g (WHO2005) | 256 | 1,9 | >99 |
| PCB pg TEQ/g (WHO2005) | 40 | <0,2 | >99 |
| PAK als Benzo(a) Piren in ng/g | 170 | 127 | 25 |

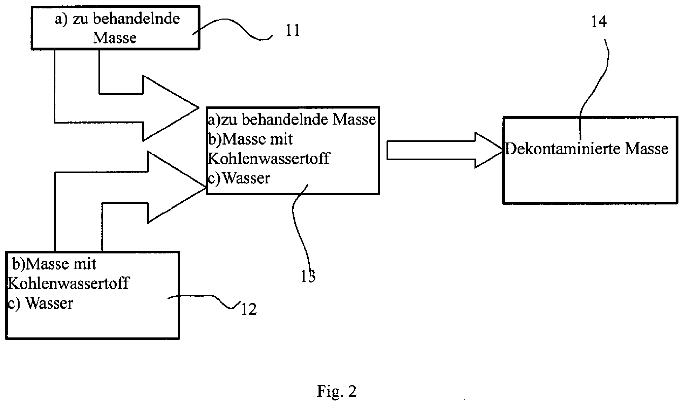

In der Figur 2 ist ein kontinuierliches Behandlungsverfahren dargestellt. Der Reaktor wird vorzugsweise durch zwei Flüsse gespeist.

Ein erste Fluss speist das zu behandelnde Material 11 und der zweite Fluss 12 gibt in Abhängigkeit der zu behandelnden Masse organischen Kohlenstoff und Wasser zum Beispiel in der Form einer feuchten Biomasse hinzu. Am Ende des Reaktors 13, durch welchen zum Beispiel ein hermetisch nach außen abgeschlossenes Förderband läuft, ist die Behandlung erfolgt 14.

Vorzugsweise kann eine Vorrichtung verwendet werden, um den Reaktor mit Hitze von Außen zu versorgen.

Die Schadstoffe sind z.B Polychlorierte Dibenzo-p-dioxine und Dibenzofurane, Polychlorierte Biphenyle und/oder polyzyklisch, aromatische Kohlenwasserstoffe (PAK), generell chlororganische Verbindungen.

## Patentansprüche

1. Verfahren zum Abbau von organischen Schadstoffen in einer Masse, die 1%-50 % des Gesamtgewichtes aus dem zu dekontaminierenden Material, 1%-50 % des Gesamtgewichtes aus Biomasse und 50%-90% des Gesamtgewichtes aus Wasser besteht, das durch folgende Schritte gekennzeichnet ist:
- Behandlung der Masse bei einer Temperatur oberhalb von 300°C bis 400°C und einem Druck oberhalb von 90 bar bis 250 bar und einer Behandlungsdauer länger als 1 Stunde, in einem hermetisch abgeschlossenen Raum unter Ausschluss von Sauerstoff.

2. Verfahren nach einem der vorstehenden Ansprüche, **dadurch gekennzeichnet, dass** ein Abbaugrad von mindestens 90% erreicht wird.

3. Verfahren nach einem der vorstehenden Ansprüche, **dadurch gekennzeichnet, dass** der organischen Kohlenstoff Biomasse ist.

4. Verfahren nach einem der vorstehenden Ansprüche, **dadurch gekennzeichnet, dass** die Behandlungsdauer länger als 5 Stunden ist.

5. Verfahren nach Anspruch 1, **dadurch gekennzeichnet, dass** das kontaminierte Material in verseuchten Industrieresten enthalten ist.

6. Verfahren nach Anspruch 1, **dadurch gekennzeichnet, dass** das kontaminierte Material in Filterstaub enthalten ist.

7. Verfahren nach Anspruch 1, **dadurch gekennzeichnet, dass** die kontaminierenden Substanzen Polychlorierte Dibenzo-p-dioxine, Dibenzofurane, Polychlorierte Biphenyle, und/oder polyzyklische, aromatische Kohlenwasserstoffe (PAK) sind.

8. Verfahren nach Anspruch 1, **dadurch gekennzeichnet, dass** die kontaminierenden Substanzen chlororganische Verbindungen sind.

## Claims

1. A process for decomposition of organic pollutants in a mass composed of 1% to 50% material to be decontaminated, 1% to 50% biomass and 50% to 90% water, based on the total weight, which is **characterized by** the steps of:
- treating the mass at a temperature of more than 300°C up to 400°C and
a pressure of more than 90 bar up to 250 bar and a treatment time of more than 1 hour, in a hermetically sealed space without oxygen.

2. A process as claimed in the preceding claims, **characterized in that** a degree of decontamination of at least 90% is attained.

3. A process as claimed in any of the preceding claims, **characterized in that** organic carbon is biomass.

4. A process as claimed in any of the preceding claims, **characterized in that** the treatment time is at least 5 hours.

5. A process as claimed in claim 1, **characterized in that** said pollutants are contained in polluted industrial waste.

6. A process as claimed in claim 1, **characterized in that** said pollutants are contained in filter dust.

7. A process as claimed in claim 1, **characterized in that** said pollutants are polychlorinated dibenzo-p-dioxins, pesticides, polychlorinated dibenzofurans, polychlorinated biphenyls and/or polycyclic aromatic hydrocarbons (PAHs).

8. A process as claimed in claim 1, **characterized in that** said pollutants are chlorinated organic compounds.

## Revendications

1. Procédé de décomposition de polluants organiques dans une masse composée d'1% à 50% de matière à décontaminer, d'1% à 50% de biomasse et de 50% à 90% d'eau par rapport au poids total, **caractérisé par** les étapes consistant à:
- traiter la masse à une température au-dessus de 300°C jusqu'à 400°C et
une pression au-dessus de 90 bar jusqu'à 250 bar et une durée de traitement de plus d'1 heure, dans un espace hermétique sans oxygène.

2. Procédé selon les revendications précédentes, **caractérisé en ce qu'**un dégré de décontamination d'environ 90& est atteint.

3. Procédé selon n'importe laquelle des revendications précédentes, **caractérisé en ce que** le carbone organique est une biomasse.

4. Procédé selon n'importe laquelle des revendications précédentes, **caractérisé en ce que** la durée de traitement est d'au moins 5 heures.

5. Procédé selon la revendication 1, **caractérisé en ce que** lesdits polluants sont contenus dans des déchets industriels pollués.

6. Procédé selon la revendication 1, **caractérisé en ce que** lesdits polluants sont contenus dans une poussière de filtrage.

7. Procédé selon la revendication 1, **caractérisé en ce que** lesdits polluants sont polychlorodibenzo-p-dioxines, pesticides, polychlorodibenzofuranes, polychlorobiphényles et/ou hydrocarbures aromatiques polycycliques (PAHs).

8. Procédé selon la revendication 1, **caractérisé en ce que** lesdits polluants sont des composés organiques chlorés.
